(19) Europäisches Patentamt
European Patent Office
Office européen des brevets

(11) EP 2 008 732 B1

(12) EUROPEAN PATENT SPECIFICATION

(45) Date of publication and mention
of the grant of the patent:
**30.10.2013 Bulletin 2013/44**

(51) Int Cl.:
*B21B 17/14* (2006.01)    *B21B 23/00* (2006.01)
*B21B 27/02* (2006.01)    *B21C 1/22* (2006.01)
*C22C 38/00* (2006.01)    *C22C 38/06* (2006.01)
*C22C 38/58* (2006.01)

(21) Application number: **07739490.6**

(22) Date of filing: **23.03.2007**

(86) International application number:
**PCT/JP2007/056049**

(87) International publication number:
**WO 2007/111258 (04.10.2007 Gazette 2007/40)**

(54) **COLD FINISH SEAMLESS STEEL PIPE FOR DRIVE SHAFT AND METHOD FOR PRODUCING THE SAME**

KALTBEARBEITETES NAHTLOSES STAHLROHR FÜR EINE ANTRIEBSWELLE UND HERSTELLUNGSVERFAHREN DAFÜR

TUBE EN ACIER FINI A FROID SANS JOINTURE POUR ARBRE DE TRANSMISSION ET PROCEDE POUR SA PRODUCTION

(84) Designated Contracting States:
**DE ES FR IT**

(30) Priority: **29.03.2006 JP 2006090719**

(43) Date of publication of application:
**31.12.2008 Bulletin 2009/01**

(73) Proprietor: **Nippon Steel & Sumitomo Metal Corporation**
**Tokyo 100-8071 (JP)**

(72) Inventor: **YAMAMOTO, Tadayuki**
**Osaka-shi, Osaka 5410041 (JP)**

(74) Representative: **Zimmermann & Partner**
**Postfach 330 920**
**80069 München (DE)**

(56) References cited:
**EP-A1- 1 595 609      WO-A1-2005/092531**
**JP-A- 10 140 249      JP-A- 11 290 956**
**JP-A- 2002 361 319    JP-A- 2005 320 575**
**JP-A- 2006 037 205**

**Description**

TECHNICAL FIELD

The present invention relates to a cold finished seamless steel pipe for use as a drive shaft and to a method of producing the same and, more particularly, to a cold finished seamless steel pipe to be used as a hollow member high in strength and excellent in fatigue strength and best suited for reducing the weight of an automotive drive shaft and ensuring quietness or noise reduction, and to a method of producing such seamless steel pipe efficiently.

BACKGROUND ART

In view of the recent growing need for the protection of the global environment, it is demanded that the body of an automobile be reduced in weight to achieve a further energy saving effect. Therefore, from the auto body weight reduction viewpoint, attempts have been made to use a hollow automotive member instead of the corresponding solid one. Among such attempts, a hollow member has been employed as an automotive drive shaft.

More specifically, a friction-welded type hollow drive shaft comprising three pieces (an intermediate piece portion is made of steel pipe without heat treatment such as induction hardening, and end portions to be connected to a constant-velocity joint or a differential gear are each made of solid material or forged material) has now been partly employed so as to reduce the automobile body weight and at the same time ensure maneuverablility and quietness.

The automotive drive shaft is an important security member for transmitting the torque of the revolving shaft of an engine to driving wheels and therefore is required to secure a sufficient level of fatigue strength. Japanese Patent Document No. 2005-320575 and European Patent Application NO. 1 743 950 A1 discloses a seamless steel tube having excellent toughness and torsion fatigue strength comprising, in mass% C : 0.30 to 0.50%, Si : 0.5% or less, Mn : 0.3 to 2.0%, P: 0.025% or less, S : 0.005% or less, Cr : 0.15 to 1.0%, Al : 0.001 to 0.05%, Ti : 0.005 to 0.05%, N: 0.02% or less, B: 0.0005 to 0.01% and O (oxygen)  : 0.0050% or less, the balance being Fe and impurities and a method of producing the same by a step of cold working steel tube blanks of not less than 5% in cross-sectional area reduction rate. However, when a seamless steel pipe is used as a hollow member of such shaft, the steel pipe may retain wrinkle-like flaws on the inner surface of the hollow member, namely unevenness flaws developed on the inner surface as seen in the cross section perpendicular to a lengthwise direction (hereinafter referred to as "inner surface wrinkles"), depending on the steel pipe production conditions. When such inner surface wrinkles remain, they tend to act as factors causing damages, for example act as initiating points for fatigue fracture, thus markedly weakening the fatigue strength of the drive shaft.

Therefore, in producing a steel pipe for use as a hollow member of a drive shaft, a technique has been investigated which comprises inserting a plug or other type of mandrel into the steel pipe and repeating cold drawing until obtaining a predetermined size. According to the technique comprising repeating cold drawing, the steel pipe can be processed to acquire smooth inner and outer surfaces and to have a predetermined size. For obtaining a smooth inner surface, however, several repetitions of drawing work and intermediate annealing are required, causing a problem that the production cost increases.

For solving such problems, Japanese Patent No. 2, 822, 849 proposes a method of producing a seamless steel pipe for use in an automobile, for example as a drive shaft, which method comprises efficiently producing a seamless steel pipe using a stretch reducer according to the Mannesmann pipe manufacturing process and machining the inner surface of this steel pipe by shot blast grinding, for instance. According to this method, the wrinkles occurring on the hot-rolled seamless steel pipe inner surface are allegedly removed by machining the inner surface to a depth of 20 um to 500 pm, so that the fatigue strength can be improved.

However, a phenomenally long treatment time is required for such inner surface grinding by shot blasting. Specifically, the target steel pipes for drive shaft use are small-diameter members having an inside diameter of about 15 ø to 25 ø and, for shot finishing of the inner surface of those pipes to secure the above-mentioned extent of grinding, a treatment time as long as tens of minutes to several hours is required. Therefore, the production method proposed in Japanese Patent No. 2, 822, 849 has big problems: increases in production cost and failure to secure the capability of mass production which is required from the industrial viewpoint.

DISCLOSURE OF THE INVENTION

The Mannesmann pipe manufacturing process for producing seamless steel pipes by hot working is comprised of a piercing step for making a hole in the central part of a solid billet, an elongation rolling step for reducing the wall thickness of the thus-obtained hollow pipe and a sizing rolling step for reducing the outside diameter of the hollow pipe to finish the pipe to a desired size.

Generally, such a piercing/rolling mill as a Mannesmann piercer, a cross-roll piercing/rolling mill or press piercing mill is used in the piercing step, such a rolling mill as mandrel mill, plug mill or Assel mill is used in the stretch rolling step, and a caliber rolling mill such as a stretch reducer or sizer is used in the sizing rolling step.

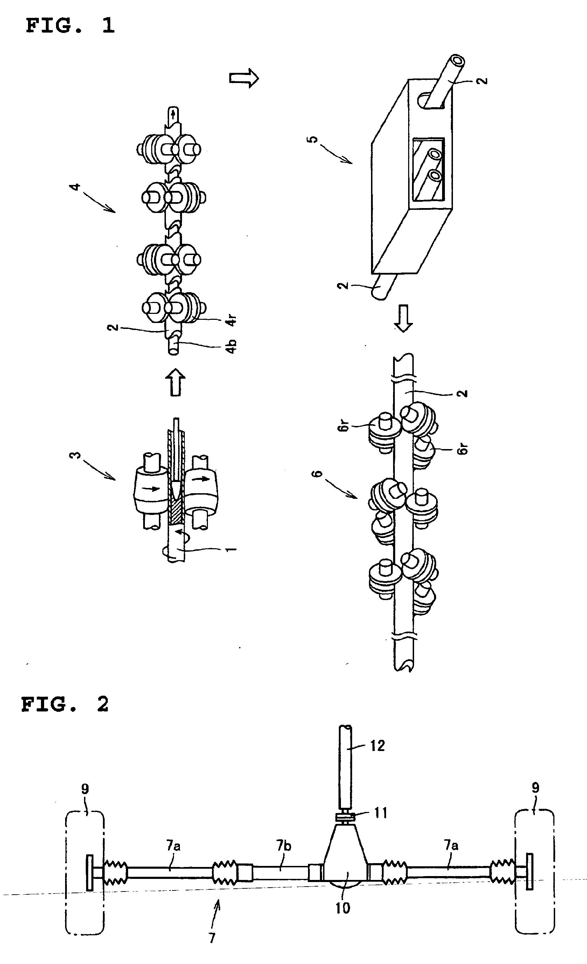

Fig. 1 is a representation illustrating an exemplary pipe production process for making seamless steel pipes by hot working according to the Mannesmann process. In this pipe production process, a solid round billet 1 to be rolled is heated to a predetermined temperature and the axial central part thereof is pierced on a piercing/rolling machine 3 to give a hollow pipe 2, which is fed to a following elongation rolling apparatus comprising a mandrel mill 4 for elongation rolling. After going through the mandrel mill 4, the hollow pipe 2 is then sent to a reheating furnace 5 and, after reheating, is passed through a sizing rolling apparatus comprising a stretch reducer 6, whereby a seamless steel pipe for use as a mother pipe to be subjected to cold working, for instance, is produced.

In such a pipe production process, the stretch reducer 6 as shown is configured such that a plurality of rolling roll sets, each composed of three caliber rolling rolls 6r disposed in circumferentially equally-spaced apart relation with each other about the pass line, are provided on respective roll stands, wherein the caliber rolling rolls 6r in an adjacent roll stand are disposed so as to perform rolling work in a direction turned by an angle of 60-degree in a plane perpendicular to the pass line from what the rolls in the stand of reference does.

Other stretch reducer configurations currently employed are a four-roll type sizing rolling apparatus equipped with sets of four caliber rolling rolls, wherein the caliber rolling rolls in an adjacent roll stand are disposed so as to perform rolling work in a direction turned by an angle of 90-degree in a plane perpendicular to the pass line from what the rolls in the stand of reference does, and a two-roll type sizing rolling apparatus equipped with sets of two caliber rolling rolls facing each other in respective roll stands.

In the case of a stretch reducer used as a sizing rolling apparatus, such an inner surface restraining tool as a mandrel is not used but the hollow pipe is reduced in outside diameter by rolling and gets finished and, therefore, wrinkles in a longitudinal streak-like form are readily formed on the inner surface of the hot-rolled steel pipe.

Furthermore, in the case of such a stretch reducer as shown in Fig. 1, the outside diameter is reduced by sets of three rolling rolls and, therefore, the hollow pipe is subjected to rolling work from three radial directions relative to the pass line. As a result, the inner surface of the hot-finished steel pipe cannot always have a true circular shape but readily becomes an angled or polygonal circle-like shape and concavo-convex irregularities are readily formed on the inner surface. It is difficult to correct such inner surface concavo-convex irregularities to form a true circle by grinding alone such as shot blasting.

Generally, a drive shaft made of a hollow member is treated for increasing strength thereof to secure a sufficient level of fatigue strength; however, such strengthened material readily allows development of fatigue fracture initiating from an inner surface wrinkle, resulting in marked decreases in fatigue strength in certain instances. Therefore, the susceptibility of the hollow material for a drive shaft to stress concentration causing fatigue fracture increases in response to the strength increasing treatment; therefore, it is strongly demanded that the inner surface quality be secured.

The present invention, which has been made in view of the problems encountered in the art in producing a seamless steel pipe for automotive use, for example as a drive shaft, has an object to provide a cold finished seamless pipe which: is best suited for use, in particular, in a hollow drive shaft of a jointed type such as a friction-welded type; serves to reduce the weight of the automotive drive shaft and ensures quietness or reduces the noise; and is excellent in strength and fatigue strength by subjecting a hot-rolled hollow pipe produced by the Mannesmann pipe manufacturing process to cold drawing as well as a method of producing the same.

The drive shaft is a part for transmitting the torque of the rotating shaft of an automotive engine to driving wheels and, therefore, it is desirable that the occurrence of a defect possibly serving as an initiation for fatigue fracture be avoided. However, in a sizing rolling apparatus such as a stretch reducer, the hollow pipe is finished by outside diameter reducing rolling without using any inner surface restraining tool, as mentioned above; therefore, longitudinal streak-like inner surface wrinkles are readily formed on the hot-rolled steel pipe.

Therefore, investigations were made on the influences of inner surface wrinkles on the fatigue life time, in particular the influences of the wrinkle depth on the fatigue strength, of a drive shaft of the friction-welded type intended for using a steel pipe, produced as a hollow member, in as-is condition.

Fig. 2 is an exemplary schematic representation of an outline configuration of a drive shaft connected to driving wheels in an automobile driving system comprising a propeller shaft. In the configuration shown, a drive shaft 7 is composed of: equal-length shafts 7a an outward end of each of which is to be connected to a driving wheel; and an intermediate shaft 7b one end of which is to be connected to a differential gear system 10, the intermediate shaft being disposed in the intermediate portion. The differential gear system 10 is fixed to the automobile body and the power input shaft thereof is connected with a propeller shaft 12 via a joint 11; it cannot be disposed in the central portion of the auto body from the auto body structure viewpoint.

In the present application, the phrase "for a drive shaft" means the use as a shaft 7a and/or 7b constituting the drive shaft 7, among others.

From the viewpoint of driving torque power transmission efficiency, it is effective to make connections with the driving wheels via equal-length shafts 7a and, therefore, an intermediate shaft 7b is disposed in the middle portion to enable the connections via the equal-length shafts 7a. In the friction-welded type drive shaft, a steel pipe in as-is condition is generally used as the intermediate shaft 7b in the drive shaft to be connected with driving wheels.

When, for example, a steel pipe as the intermediate shaft transmits the rotating shaft torque, the drive shaft outside surface suffers greater shearing stress as compared with the inner surface. Therefore, when the drive shaft inner surface is free of such flaws as wrinkles and both the inner and outside surfaces have sufficiently high fatigue limit shearing stresses, fatigue fracture develops and grows on the outside surface side on which greater shearing stress acts than on the inner surface.

Therefore, if, even when inner surface wrinkles occur on the inner surface, the inner surface wrinkles developing on the inner surface side can be controlled so that the fatigue limit shearing stress on the inner surface side may not exceed the shearing stress specified on the outside surface side, even the inner surface wrinkles remaining in the steel pipe produced as a hollow member will not influence the fatigue life time of the drive shaft as a consequence and will not cause any practical problem.

From such viewpoint, the influences of inner surface wrinkles remaining in cold finished steel pipes on the fatigue life time thereof were investigated in detail and, as a result, it was found that the critical depth thereof is 0.20 mm.

Based on the above finding as a premise, the behavior of inner surface wrinkles developing in sizing rolling using a stretch reducer or the like was investigated. As a result, it was found that, in sizing rolling, inner surface wrinkles develop in a concentrated manner at those portions of the pipe which correspond to edge portions of the caliber rolling rolls and, therefore, the inner surface wrinkles are caused by the fact that the rolling rolls have an elliptical caliber profile. It was thus found that by making the caliber profile closer to a true circle and appropriately selecting the profile ratio (ratio of the radius of the inner surface curvature to the average inside radius) of the pipe at sites corresponding to the edge portions, it becomes possible to control the inner surface wrinkle depth so that the wrinkles may not influence the fatigue life time of the drive shaft.

It was also revealed that even when the hollow pipe after sizing rolling has inner surface wrinkles developed therein, the inner surface wrinkles can be prevented from growing in the subsequent cold drawing step if a certain wall thickness reduction rate can be secured at minimum wall thickness portion (angular bottom portion) resulting also from the wall thickness eccentricity of the hollow pipe.

Furthermore, it was found that by reducing a S content in designing steel composition, it becomes possible to improve the fatigue life time of the drive shaft in a fatigue test on the high cycle side. Thus, it was revealed that the use of a low S steel is effective in producing a steel pipe for a drive shaft.

The present invention has been completed based on such technological findings as mentioned above and is directed to a cold finished seamless steel pipe for a drive shaft as defined in claims 1-2 and to a method of producing a cold finished seamless steel pipe for a drive shaft as defined in claims 3-6.

The cold finished seamless steel pipe for a drive shaft according to the present invention as produced by subjecting a hollow pipe hot rolled by the Mannsmann pipe manufacturing process to cold drawing can be employed as a hollow member high in strength and excellent in fatigue strength and best suited for reducing the weight of an automotive drive shaft and ensuring quietness. Therefore, by applying the production method according to the present invention, it becomes possible to produce an automotive drive shaft at low production cost and efficiently; thus, the present invention is highly effective from the industrial viewpoint and can be applied widely.

BRIEF DESCRIPTION OF THE DRAWINGS

Fig. 1 is a representation of an example of the Mannesmann pipe manufacturing process for producing a seamless steel pipe by hot working.

Fig. 2 is a schematic representation of the outline configuration of a drive shaft to be connected with driving wheels.

Fig. 3 is a representation of condition of an inner surface wrinkle remaining on the steel pipe inner surface as seen in a cross section perpendicular to the lengthwise direction of the steel pipe.

Fig. 4 is a representation of condition of another type of inner surface wrinkle having a different shape and remaining on the steel pipe inner surface as seen in a cross section perpendicular to the lengthwise direction of the steel pipe.

Fig. 5 is a graphic representation of the relationship between the mean value $\alpha$ of the pipe profile ratios (ratio between the radius of curvature of the inner surface and the average inside radius) at those sites of the hollow pipe which correspond to the edge portions for all the stands (Nos. 1 to N) and the depth of the inner surface wrinkle generated on the hollow pipe at an outside diameter reduction rate of 50% or more.

Fig. 6 is a graphic representation of the relationship between the minimum angle $\beta$min (degrees) among the angles $\beta$ (degrees) each formed by two tangential lines drawn at the opposing edge portions of mutually neighboring caliber rolling rolls in each stand for all the stands in a sizing rolling apparatus and the pipe dimension t/D after sizing rolling.

Fig. 7 is a depiction showing a caliber profile on a rolling roll used in a stretch reducer.

Fig. 8 is a depiction illustrating the way of determining the angle formed by two tangential lines drawn at the opposing edge portions so as to define the caliber rolling rolls to be used in the practice of the present invention.

Fig. 9 is a depiction showing other representative factors among caliber profiles of rolling rolls to be used in a stretch reducer.

Fig. 10 is a depiction illustrating the configuration of each test specimen used in the torsion fatigue test carried out in the examples.

BEST MODES FOR CARRYING OUT THE INVENTION

The cold finished seamless steel pipe for a drive shaft according to the present invention is characterized in that the depth of the inner surface wrinkle remaining on the inner surface is not more than 0.20 mm so that the hollow drive shaft, in particular the hollow drive shaft of a jointed type such as a friction-welded type, in which the steel pipe is used in as-is condition, may have a high level of fatigue strength.

The inner surface wrinkle depth is defined herein as the depth of the deepest inner surface wrinkle as found upon checking out over the whole inner surface of the steel pipe. The inner surface wrinkle depth measurement can be carried out, for example by taking a sample for microscopic observation from an end portion of the steel pipe, followed by microscopic observation of the whole circumference of the inner surface thereof.

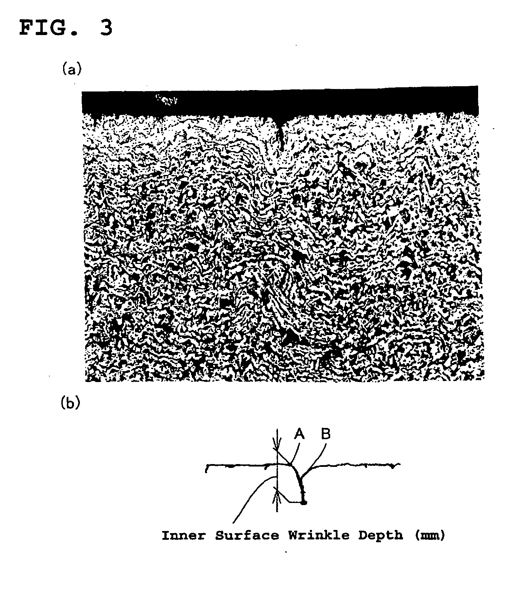

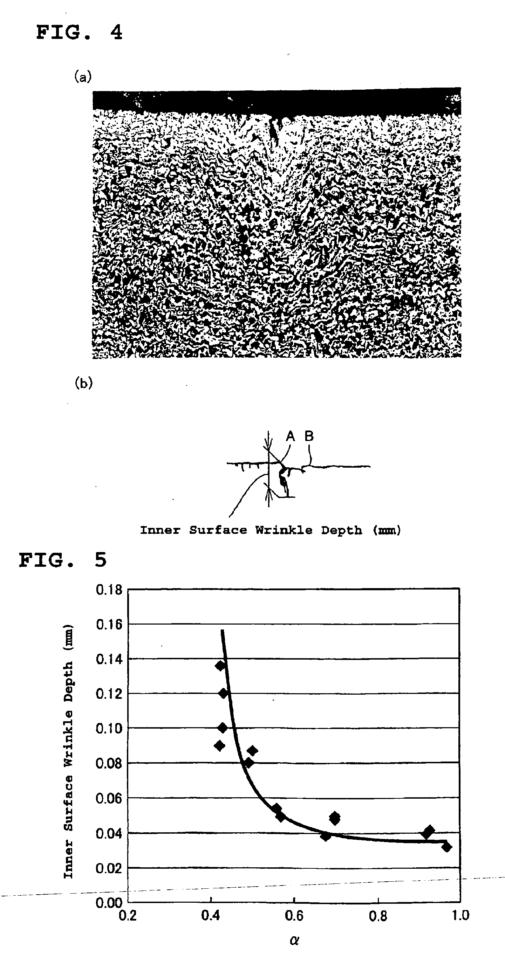

Fig. 3 and Fig. 4 show the conditions of two inner surface wrinkles remaining on the steel pipe inner surface and differing in shape as seen in a cross section perpendicular to the lengthwise direction of the steel pipe and the method of determining the inner surface wrinkle depth is illustrated in each of Figs. 3 (b) and 4 (b). Thus, the inner surface wrinkle depth is defined as the distance from the higher (A in the figures) of both the shoulder tops A and B to the wrinkle bottom.

By controlling the depth of the inner surface wrinkle remaining on the inner surface at levels not more than 0.20 mm, it becomes possible to prevent the fatigue limit shearing stress at the inner surface wrinkle tip from exceeding the shearing stress defined on the outer surface side. As a result of such control of the inner surface wrinkle depth, the number of repetitions of torsion until fracture in a torsion fatigue test carried out under conditions of the maximum shearing stress $\tau = \pm$ 145 N/mm$^2$ (fully reversed) becomes at least one million, as shown later herein in the example section; thus, no influence is exerted on the fatigue life of the automotive drive shaft and no practical problem is produced.

The cold finished seamless steel pipe for a drive shaft according to the present invention has a tensile strength of not less than 784 MPa and not more than 950 MPa. The lower tensile strength limit is set at 784 MPa since increased strength and rigidity are desirable for securing the fatigue strength of the drive shaft. On the other hand, toughness decreases at tensile strength levels exceeding 950 MPa; therefore, the upper limit is set at that level.

Further, the fatigue life on the high cycle side in fatigue test of the drive shaft can be improved by reducing a S content in the steel pipe. Therefore, the cold finished seamless steel pipe for a drive shaft according to the present invention is made of a low S steel grades (S: not more than 0.005%) and is also characterized in that it has a high strength level, namely a tensile strength of not less than 784 MPa and not more than 950 MPa.

The steel composition and production conditions required for the cold finished seamless steel pipe for a drive shaft according to the present invention to have the above-mentioned characteristics are now described one by one. In the description which follows, the chemical composition is described on the "% by mass" basis.

1. Steel composition

C: 0.30-0.47%

C is an element increasing the strength of the steel and improving the fatigue strength thereof but has a toughness decreasing effect. At content levels below 0.30%, sufficient strength cannot be obtained. On the other hand, at content levels exceeding 0.47%, the strength after cold working becomes excessively high and the toughness decreases. Therefore, the C content is to be 0.30-0.47%.

Si: 0.50% or less

Si is an element effective in deoxidizing the steel and increasing the strength thereof. At content levels exceeding 0.5%, however, the cold workability cannot be secured. Therefore, the Si content should not exceed 0.5% for securing a good cold workability.

Mn: 0.50-2.00%

Mn is an element effective in improving the strength and toughness of the steel. At content levels below 0.50%, however, sufficient levels of strength and toughness cannot be obtained. At levels exceeding 2.00%, the cold workability lowers. Accordingly, the Mn content is to be 0.50-2.00%.

P: 0.020% or less

P is contained in the steel as an impurity. In the process of solidification, it is concentrated in the vicinity of each final solidification site and segregates within grain boundaries, causing reductions in hot workability, toughness and fatigue strength. P content levels exceeding 0.020% cause decreases in toughness and fatigue strength due to its grain boundary segregation; therefore, the upper limit to the content thereof as an impurity is set at 0.020%.

S: 0.005% or less

Like P, S is an element contained in the steel as an impurity. In the process of solidification, it segregates within grain boundaries and causes decreases in hot workability and toughness. Further, when the S content is in excess of 0.005%, the amount of MnS in the steel increases and the decreases in fatigue strength become significant. Therefore, the upper limit to the S content as an impurity is set at 0.005%.

Al: 0.001-0.050%

Al is an element serving as a deoxidizer. For obtaining the effect thereof as a deoxidizer, a content of at least 0.001% is necessary. On the other hand, at content levels exceeding 0.050%, the alumina type inclusion content increases, and decreases in fatigue strength are caused thereby. Therefore, the Al content is to be 0.001-0.050%.
The cold finished seamless steel pipe for a drive shaft according to the present invention may further contain, in addition to the above-mentioned steel composition, one or more elements selected from among Cr: 1.5% or less, Ti: 0.05% or less, Nb: 0.05% or less, V: 0.1% or less, Mo: 1% or less, Ni: 0.5% or less, Cu: 0.5% or less, B: 0.05% or less and Ca: 0.01% or less so that various characteristics in addition to the fatigue strength may be improved.

2. Production conditions

(Production conditions in the hot working step)

As an example of the method of producing a cold finished steel pipe for a drive shaft according to the present invention, there may be mentioned the Mannesmann pipe manufacturing process using a mandrel mill and a stretch reducer, as shown in Fig. 1 referred to hereinabove.
On that occasion, the roundness of the pipe inner surface worked in sizing rolling on a stretch reducer can be properly improved to thereby prevent the inner surface profile from becoming polygonalized in the process of rolling and effectively inhibiting the generation and development of inner surface wrinkles (cf., if necessary, WO 2005/092531 A1 filed by the same applicant).
Fig. 5 is a graphic representation of the relationship between the mean value $\alpha$ of the pipe profile ratios (ratio of the radius of the inner surface curvature to the average inside radius) at those sites of the hollow pipe which correspond to the edge portions for all the stands (Nos. 1 to N) and the depth of the inner surface wrinkle generated on the hollow pipe at an outside diameter reduction rate of 50% or more.
In Fig. 5, there is shown the above-mentioned relationship as found upon subjecting a carbon steel pipe having an outside diameter of 100 mm and a wall thickness of 11 mm to sizing rolling to give a pipe having an outside diameter of 40 mm and a wall thickness of 9.6 mm while varying the caliber profile conditions of the caliber rolling rolls 6 disposed on each stand. The outside diameter reduction rate is defined by the following formula (3) :

$$\text{Outside diameter reduction rate} = \{(D_i - D)/D_i\} \times 100 \ (\%) \cdots (3)$$

where $D_i$ is the pipe outside diameter before sizing rolling and D is the pipe outside diameter after sizing rolling.
The mean value $\alpha$ is the value obtained by measuring the radius of curvature of each of those inner surface sites of the hollow pipe which correspond to the edge portions and the average inside radius of the hollow pipe on the outlet side of each stand using a three-dimensional shape measuring instrument (product of Tokyo Seimitsu Co., Ltd.), and the pipe profile ratio value calculated for each stand outlet side based on the thus-obtained measured values is averaged by dividing the sum thereof by the number of stands. On the other hand, the inner surface wrinkle depth is the maximum wrinkle depth on the hollow pipe as measured on the outlet side of the sizing rolling apparatus 6 by cutting out, as a sample, a portion of the hollow pipe after rolling and measuring the wrinkle depth of the cross section of the sample by microscopic observation. The method of measuring the wrinkle depth is as defined in Fig. 3 and Fig. 4 referred to hereinabove.

From the relationship shown in Fig. 5, it is seen that there is a borderline $\alpha$ value at about 0.55; the inner surface wrinkle depth rapidly increases as the mean value $\alpha$ decreases from that value and, conversely, when the mean value $\alpha$ is 0.55 or more, the generation and/or development of wrinkles to be formed on the steel pipe inner surface can be effectively prevented.

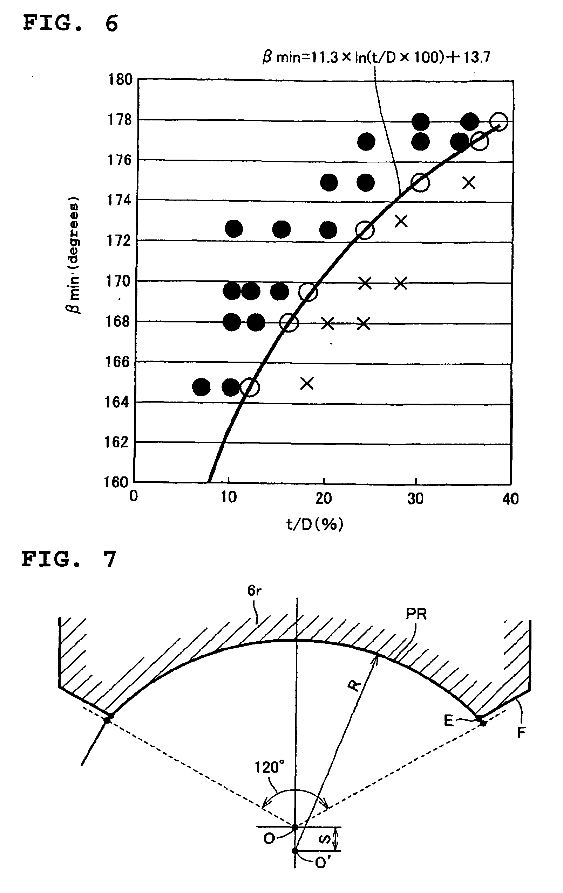

Fig. 6 is a graphic representation of the relationship between the minimum angle $\beta min$ (degrees) in all stands and the pipe dimension $t/D$ after sizing rolling in a sizing rolling apparatus, the $\beta min$ being the minimum one among obtained angles $\beta$ (degrees) where each angle is formed by two tangential lines drawn at the opposing edge portions of the neighboring caliber rolling rolls in each stand. In the relations shown in Fig. 6, the data plotted with "○" are data obtained when the above-mentioned mean value $\alpha$ of the rolled hollow pipe was 0.55, the data plotted with "●" are data obtained when the above-mentioned mean value $\alpha$ of the rolled hollow pipe was above 0.55, and the data plotted with "×" are data obtained when the above-mentioned mean value $\alpha$ was less than 0.55.

From the relationship shown in Fig. 6, it is seen that for raising the above-mentioned mean value $\alpha$ to a level of 0.55 or more, it is only required to select the minimum angle $\beta min$ among all the stands at a predetermined level or more for each $t/D$ value. Namely, it is seen that it is effective to approximate the values of the $\beta min$ at which the above-mentioned mean value $\alpha$ of the hollow pipe was equal to 0.55 for the respective values of $t/D$ by a function (natural logarithmic function) with the $t/D$ as a variable and design the caliber profile of the rolling rolls 6 so that the $\beta min$ may have a value given by the approximation function or a higher value.

More specifically, when following piercing rolling and the subsequent elongation rolling, sizing rolling is carried out on a sizing rolling apparatus comprising a plurality of stands such as a stretch reducer and when phantom tangential lines are drawn at the opposing edge portions of the neighboring caliber rolling rolls in each stand and the minimum angle among the angles $\beta$ (degrees) formed by the respective two tangential lines is designated as $\beta min$ (degrees), it is necessary to use those caliber rolling rolls which satisfy the relation represented by the formula (1) given below. In the formula (1), D is the pipe outside diameter (mm) after sizing rolling, t is the pipe wall thickness (mm) after sizing rolling and ln (x) is the natural logarithm of x.

$$\beta min \geq 1.13 \times 10 \times \ln(t/D \times 100) + 1.37 \times 10^2 \cdots (1)$$

Fig. 7 is a depiction showing a caliber shape on a rolling roll used in a three-roll type stretch reducer. The caliber profile of each caliber rolling roll 6r to be disposed on the stretch reducer has an arc with a radius R from the caliber center O' offset (offset distance: S) outwardly from the caliber rolls' center O situated on the pass line, and this arc constitutes the caliber profile PR so that the arc directly crosses each flange side wall face F of the rolling roll 6r. And, the edge portion E of the rolling roll 6r serves as the end portion of the caliber profile PR and corresponds to the end portion of the above-mentioned arc with the radius R.

Since, as mentioned hereinabove, inner surface wrinkles are generated at those sites of the pipe to be rolled which correspond to the edge portions of the rolling rolls in sizing rolling on a stretch reducer, the caliber profile is to be designed properly and at the same time the angle $\beta$ is to be given a predetermined value relative to the value of $t/D$, as shown by the above formula (1), in view of the fact that there is a certain relationship between the pipe profile ratios (ratio of the radius of the inner surface curvature to the average inside radius, the mean value $\alpha$) at sites corresponding to the edge portions and the inner surface wrinkle depth.

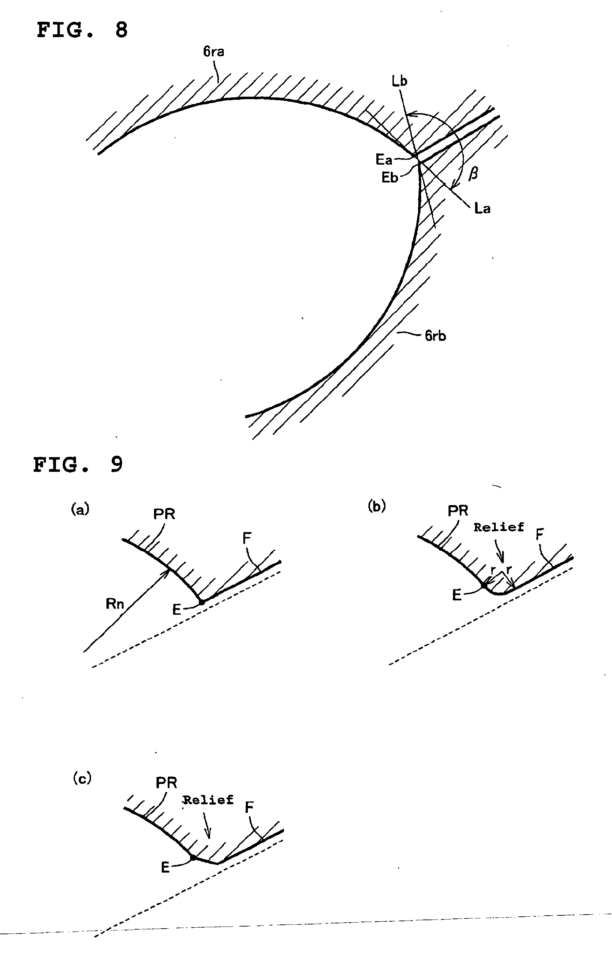

Fig. 8 is a depiction illustrating the way of determining the angle formed by two phantom tangential lines drawn at the edge portions so as to define the caliber rolling rolls to be used in the practice of the present invention. First, a tangential line La (line tangential to the caliber profile in the vicinity of the edge portion Ea) is drawn at an edge portion Ea of a rolling roll 6ra disposed on each stand of the stretch reducer, a tangential line Lb (line tangential to the caliber profile in the vicinity of the edge portion Eb) is drawn at Eb, one of the edge portions of the adjacent rolling roll 6rb, which faces the edge portion Ea, and the angle $\beta$ formed by both the tangential lines La and Lb is measured.

Then, the minimum angle $\beta min$ is selected from among the angles $\beta$ measured for all stands and the caliber profile of the caliber rolling rolls 6r is designed so that the formula (1) given above may be satisfied. By carrying out sizing rolling on the stretch reducer using the rolling rolls 6r designed in the manner mentioned above, it becomes possible to inhibit inner surface wrinkles from being generated on the pipe to be rolled and, if inner surface wrinkles are formed, effectively prevent them from developing or growing.

Fig. 9 is a depiction showing partial caliber profiles on other rolling rolls used in a stretch reducer. The caliber profiles of the rolling rolls 6r as covered by the present invention are not limited to those shown in Fig. 7 and Fig. 8 but it is also possible to employ a profile composed of a plurality of arcs differing in radius and directly crossing the flange side wall face F, as shown in Fig. 9 (a), as the caliber profile PR of the caliber rolling rolls 6r. In this case, the edge portion E of the caliber rolling roll 6r corresponds to the end portion of the arc (radius Rn) occurring in the position closest to the flange side.

Further, a profile having an arc-shaped "relief" or a straight line "relief" disposed between the caliber profile PR and the flange side wall face F of the caliber rolling roll 6r, as shown in Fig. 9 (b) or 9 (c), may also be employed. In this case, the edge portion E of the caliber rolling roll 6r corresponds to the end portion of the arc constituting the caliber profile PR (the end portion of the arc occurring in the position closest to the flange side).

(Production conditions in the cold working step)

As mentioned hereinabove, the hollow pipe subjected to sizing rolling on a stretch reducer is given rolling work by the rolling rolls from two to four directions as the outside diameter reducing rolling proceeds and, therefore, inner surface wrinkles or angular portions may be generated or formed at sites corresponding to the edge portions of the rolling rolls. In particular, when those caliber rolling rolls satisfying the formula (1) given above are not used, the incidence of inner surface wrinkles and angular portions becomes significant.

In the case of the cold finished steel pipe for a drive shaft according to the present invention, not only the growth of inner surface wrinkles can be inhited but also the formed angular portions can be improved by drawing working following the hollow pipe production by hot rolling. Further, the whole inner and outer surface of the finished pipe can also be smoothened.

In the drawing working to be applied in the practice of the present invention, either of a cylindrical plug or an SF plug (semifloating plug) may be used so long as plug drawing is made.

The drawing working to be applied in the practice of the present invention is not limited with respect to the reduction in area and the wall thickness reduction rate. However, as mentioned hereinabove, the inner surface profile of the hot-rolled hollow pipe is not a true circle but has angular portions or a polygonalized shape and, for these reasons and also due to wall thickness eccentricity, the predetermined wall thickness reduction rate cannot be secured in the minimum wall thickness portion (angular bottom) of the hollow pipe, with a result that the formation of inner surface wrinkles tends to be promoted there. Therefore, it is preferable that a wall thickness reduction rate in the minimum wall thickness portion of the hollow pipe of at least 10% be secured, since then, the promotion of inner surface wrinkle formation can be suppressed.

Furthermore, since it is necessary to control the cold finished seamless steel pipe for a drive shaft according to the present invention at high strength levels, namely tensile strength levels of not less than 784 MPa and not more than 950 MPa, without subjecting the pipe to a heat treatment such as induction hardening, it is advisable that the pipe after finish working by cold drawing be subjected to stress relief annealing at a temperature not less than 450°C and not more than the Ac1 point so as to finally adjust the tensile strength. The specific temperature conditions in stress relief annealing are decided taking into consideration the working conditions in cold drawing and the steel composition.

EXAMPLES

Using four kinds of billets made of steel grades A-D having the respective chemical compositions shown in Table 1, hollow pipes for cold working were produced by the Mannesmann pipe manufacturing process using a piercer mill, a mandrel mill and a stretch reducer.

[Table 1]

Table 1

| Steel grades | Chemical composition (mass %, remainder being Fe and impurities) | | | | | | Remark |
|---|---|---|---|---|---|---|---|
| | C | Si | Mn | P | S | Sol.Al | |
| A | 0.39 | 0.21 | 0.77 | 0.011 | 0.001 | 0.035 | Inventive steel |
| B | *0.28 | 0.23 | 0.80 | 0.018 | 0.003 | 0.040 | Comparative steel |
| C | 0.32 | 0.22 | *0.40 | 0.014 | 0.002 | 0.030 | |
| D | 0.38 | 0.25 | 0.76 | 0.013 | *0.012 | 0.028 | |
| Note: The mark * in the table indicates that the value marked is outside the range defined according to the present invention. | | | | | | | |

Each billet was heated to a piercing temperature (e.g. 1250°C) and then rolled into a hollow shell using the piercer mill and, after stretch rolling on the mandrel mill, a hollow pipe having an outside diameter of 50.8 mm and a wall thickness of 8.5, 8.2 or 8.0 mm was produced while varying the minimum flange contact angle βmin of the caliber rolling rolls disposed in the stretch reducer.

On that occasion, the minimum pipe wall thickness in a circumferential direction and the depth of the inner surface wrinkle generated were measured. The working conditions (stretch reducer rolling roll conditions etc.) in this hot working step and the results of minimum wall thickness and inner surface wrinkle depth measurements are shown in Table 2.

[Table 2]

Table 2 (Working conditions in hot working step)

| Test group | | Test material 1 | Test material 2 | Test material 3 | Test material 4 | Test material 5 | Test material 6 | Test material 7 | Test material 8 | Test material 9 |
|---|---|---|---|---|---|---|---|---|---|---|
| Steel grades applied | | Steel grade A | | | | | | * Steel grade B | * Steel grade C | * Steel grade D |
| Pipe production conditions | Pipe dimension (hollow pipe dimension) | Outside diameter D:50.8mm Wall thickness t:8.5mm t/D=16.7% | | Outside diameter D:50.8mm Wall thickness t:8.2mm t/D=16.1% | | Outside diameter D:50.8mm Wall thickness t:8.0mm t/D=15.7% | | Outside diameter D:50.8mm Wall thickness t:8.5mm t/D=16.7% | | |
| | Value of right side of formula (1) | 169 | | 168 | | 168 | | 169 | | |
| | βmin | 175 | 165 | 175 | 165 | 175 | 165 | 175 | 175 | 175 |
| Hollow pipe conditions | Minimum wall thickness | 8.1mm | 8.0mm | 7.8mm | 7.6mm | 7.5mm | 7.4mm | 8.1mm | | |
| | Inner surface wrinkle depth | 0.04mm | 0.14mm | 0.04mm | 0.16mm | 0.05mm | 0.16mm | 0.04mm | | |

Notes: • The mark * in the table indicates that the steel grade marked is outside the range defined according to the present invention. • The pipe production conditions shown are the conditions in the stretch reducer.

The thus-obtained hollow pipes for cold working were subjected to drawing working to a finish size, namely an outside diameter of 40.0 mm and a wall thickness of 7.0 mm. Then, stress relief annealing was carried out at a temperature not less than 450°C and not more than the Ac1 point for adjusting the final tensile strength and, thereby, cold finished seamless steel pipes were produced. The reduction in area and the wall thickness reduction rates were calculated as cold drawing conditions. The reduction in area is the value defined by the following formula (4), wherein A is the sectional area before drawing working and Af is the finished sectional area after drawing working:

$$\text{Reduction in area} = \{(A - Af)/A\} \times 100\ (\%) \cdots (4)$$

As for the wall thickness reduction rates, the average wall thickness reduction rate and the wall thickness reduction rate at the minimum wall thickness portion were calculated for each group and the former is given in the upper row and the latter in the lower row in Table 3. At the same time, the depth of the inner surface wrinkle remaining after cold drawing and the tensile strength after stress relief annealing were measured. The working conditions in the cold working step, the inner surface wrinkle depth and the tensile strength after stress relief annealing for each group are also shown in Table 3.

[Table 3]

Table 3

| Test group | | Test material 1 | Test material 2 | Test material 3 | Test material 4 | Test material 5 | Test material 6 | Test material 7 | Test material 8 | Test material 9 |
|---|---|---|---|---|---|---|---|---|---|---|
| Steel grades applied | | Steel grade A | | | | | | * Steel grade B | * Steel grade C | * Steel grade D |
| Drawing conditions | Dimension after drawing (product dimension) | Outside diameter D:40.0mm<br><br>Wall thickness t:7.0mm | | | | | | | | |
| | Reduction in area | 35.8% | | 33.9% | | 32.5% | | 35.8% | | |
| | Wall thickness working (Minimum wall thickness portion) | (Average) 17.6% | | (Average)14.6% | | (Average) 12.5% | | (Average)17.6% | | |
| | | 13.6% | 12.5% | 10.6% | 7.9% | 6.7% | 5.4% | 13.6% | | |
| Stress relief annealing (SR) | | A temperature not less than 450° and not more than Ac1 | | | | | | | | |
| Final conditions | Inner surface wrinkle depth | 0.05mm | 0.18mm | 0.07mm | *0.25mm | 0.12mm | *0.32mm | 0.05mm | | |
| | Tensile strength (MPa) | 842 | 851 | 833 | 846 | 843 | 837 | *720 | *735 | 858 |
| Note: The mark * in the table indicates that the steel species or value marked is outside the range defined according to the present invention. | | | | | | | | | | |

EP 2 008 732 B1

12

(Evaluation of influences on inner surface wrinkle depth)

Based on the results shown in Tables 1-3, the influences of the stretch reducer caliber rolling rolls and the wall thickness reduction rate at the minimum wall thickness portion in cold drawing on the depth of the inner surface wrinkle generated on the hollow pipe were examined.

As shown by the test materials 1 and 3, the depth of the inner surface wrinkle remaining on the pipe after finishing could be suppressed to 0.10 mm or less by rolling the hollow pipe using the caliber rolling rolls satisfying the formula (1) given herein and at the same time securing a wall thickness reduction rate of at least 10% at the minimum wall thickness portion in cold drawing.

As shown by the test material 2, even when the hollow pipe was rolled without using the caliber rolling rolls satisfying the formula (1) given herein, the depth of the inner surface wrinkle remaining on the pipe after finishing could be suppressed to 0.20 mm or less by securing a wall thickness reduction rate of at least 10% at the minimum wall thickness portion in cold drawing.

Further, as shown by the test material 5, even when the wall thickness reduction rate at the minimum wall thickness portion was below 10% in cold drawing, the depth of the inner surface wrinkle remaining on the pipe after finishing could be suppressed to 0.20 mm or below by rolling the hollow pipe using the caliber rolling rolls satisfying the formula (1) given herein.

Then, as shown by the test materials 4 and 6, the depth of the inner surface wrinkle remaining on the pipe after finishing becomes in excess of 0.20 mm when the hollow pipe is rolled without using the caliber rolling rolls satisfying the formula (1) given herein and, further, the wall thickness reduction rate at the minimum wall thickness portion in cold drawing is below 10%.

For the test materials 7 and 8, the steel compositions applied were outside the range specified in accordance with the present invention and, as a result, such a high strength level as a tensile strength of not less than 784 MPa could not be secured.

As can be seen from the results obtained with the test materials 1, 2 and 3, inner surface wrinkles can be inhibited from growing and, further, inner surface wrinkles once formed can be improved by securing a wall thickness reduction rate of at least 10% at the minimum wall thickness portion in cold drawing.

(Evaluation in a torsion fatigue test)

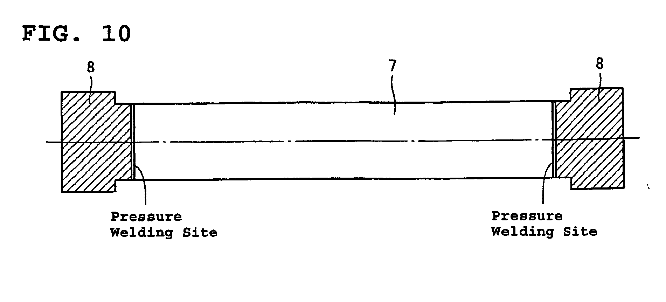

Fig. 10 is a depiction illustrating the configuration of each test specimen used in the torsion fatigue test carried out in the examples. A short pipe 7 was cut from each of the test materials 1-9 and the inner surface wrinkle depth on each pipe end was confirmed. Then, as shown in Fig. 10, the short pipe 7 just sampled from a steel pipe was friction-welded to jigs 8 to construct a test specimen, and a torsion fatigue test was performed under conditions of the maximum shearing stress $\tau = \pm 145$ N/mm$^2$ (fully reversed) and the number of repetitions (times) of application of stress until facture was determined and the fracture surface was checked under an electron microscope to confirm the initiation of fracture.

The criterion employed for judging as to whether the specimen passed the test was the number of repetitions of at least one million times. When this value was surpassed, the sample was evaluated as good (o). The results obtained in the torsion fatigue test are shown in Table 4.

[Table 4]

Table 4

| Test group | Inner surface wrinkle depth (mm) | Maximum shearing stress | Number of repetitions (times) | Site of fracture | Evaluation | Remark |
|---|---|---|---|---|---|---|
| Test material 1 | 0.05 | ±145 (N/mm²) | 1,780,517 | Other than wrinkles | ○ | Inventive example |
| Test material 2 | 0.18 | | 1,502,638 | | ○ | Inventive example |
| Test material 3 | 0.07 | | 1,738,282 | | ○ | Inventive example |
| Test material 4 | 0.25 | | 763,832 | From a wrinkle | × | Comparative example |
| Test material 5 | 0.12 | | 1,673,884 | Other than wrinkles | ○ | Inventive example |
| Test material 6 | 0.32 | | 578,323 | From a wrinkle | × | Comparative example |
| Test material 7 | 0.05 | | 783,783 | Other than wrinkles | × | Comparative example |
| Test material 8 | 0.05 | | 764,327 | | × | Comparative example |
| Test material 9 | 0.05 | | 823,432 | | × | Comparative example |

Notes: • The inner surface wrinkle depth shown is the depth at the site in contact with the pressure welding site. • In all cases, the sites of fracture were found at the pressure welding sites.

As seen from the results shown in Table 4, the number of repetitions was always in excess of one million times for the test specimens in which the depth of the inner surface wrinkle remaining after cold drawing was not more than 0.2 mm and the sites of fracture were other than inner surface wrinkles at the pressure welding sites. On the contrary, when the depth of the inner surface wrinkle remaining after cold drawing was in excess of 0.20 mm, the fracture occurred from the inner surface wrinkle at the pressure welding site and the number of repetitions was smaller than one million times.

From these results, it could be confirmed that the allowable depth of the inner surface wrinkle at which the fatigue life time of the drive shaft is affected is 0.20 mm.

Furthermore, as for the chemical composition of the steel, the number of repetitions was less than one million times with the test materials 7 and 8 incapable of securing the required strength level, namely having a tensile strength less than 784 MPa, due to insufficient contents of C and Mn and with the test material 9 which was a high S steel grade (S = 0.012%), in spite of the fact that the depth of the inner surface wrinkle remaining on the steel pipe was not more than 0.20 mm.

From these results, it can be seen that for securing the fatigue strength of the drive shaft and achieving the extension of the fatigue life time, it is essential to increase the strength of the steel pipe and apply a low S steel grade.

INDUSTRIAL APPLICABILITY

The cold finished seamless steel pipe for a drive shaft according to the present invention as produced by subjecting a hot-rolled hollow pipe by the Mannesmann pipe manufacturing process to cold drawing can be employed as a hollow member high in strength and excellent in fatigue strength and best suited for reducing the weight of an automotive drive shaft and ensuring quietness. Therefore, by applying the production method according to the present invention, it becomes possible to produce an automotive drive shaft at low production cost and efficiently; thus, the present invention is highly effective from the industrial view point and can be applied widely.

## Claims

1. A cold finished seamless steel pipe for a drive shaft, having a steel composition comprising, by mass %, C: 0.30-0.47%, Si: 0.50% or less, Mn: 0.50-2.00%, P: 0.20% or less, S: 0.005% or less and Al: 0.001-0.050%, the remainder being Fe and impurities, **characterized by** having a tensile strength of not less than 784 MPa and not more than 950 MPa and the depth of each inner surface wrinkle remaining on the inner surface thereof, as seen in a cross section perpendicular to the lengthwise direction, is not more than 0.20 mm.

2. The cold finished seamless steel pipe for a drive shaft according to claim 1 which further contains, instead of a part of Fe, one or more of Cr: 1.5% or less, Ti: 0.05% or less, Nb: 0.05% or less, V: 0.1% or less, Mo: 1% or less, Ni: 0.5% or less, Cu: 0.5% or less, B: 0.05% or less and Ca: 0.01% or less.

3. A method of producing a cold finished seamless steel pipe for a drive shaft, comprising:

   piercing and rolling a billet having a composition comprising, by mass%, C: 0.30-0.47%, Si: 0.50% or less, Mn: 0.50-2.00%, P: 0.020% or less, S: 0.005% or less and Al: 0.001-0.050%, the remainder being Fe and impurities by the Mannesmann pipe manufacturing process; elongation rolling and sizing rolling the obtained hollow pipe; and
   cold drawing the obtained hollow pipe in a manner such that a wall thickness reduction rate at the minimum wall thickness portion of the hollow pipe may amount to at least 10%.

4. The method of producing a cold finished seamless steel pipe for a drive shaft according to claim 3, wherein:

   the sizing rolling is conducted using a sizing rolling machine comprising a plurality of stands each equipped with at least two caliber rolling rolls wherein the hollow pipe is rolled using such caliber rolls that when two phantom tangential lines are drawn at opposing edge portions of neighboring caliber rolls in each stand, the smallest angle $\beta$min (degrees) among the angles $\beta$ (degrees) respectively formed by the two tangential lines as found in all the stands satisfies the relation represented by the formula (1) given below, further followed by cold drawing of the hollow pipe:

$$\beta\text{min} \geq 1.13 \times 10 \times \ln(t/D \times 100) + 1.37 \times 10^2 \cdots \qquad (1)$$

   where D: pipe outside diameter (mm) after sizing rolling, t: pipe wall thickness (mm) after sizing rolling, ln(x): natural logarithm of x.

5. The method of producing a cold finished seamless steel pipe for a drive shaft according to any of claims 3 or 4, wherein the hot-rolled hollow pipe is subjected to cold drawing and then to stress relief annealing.

6. The method of producing a cold finished seamless steel pipe for a drive shaft according to any of claims 3-5, wherein the steel composition further contains, instead of a part of Fe, one or more of Cr: 1.5% or less, Ti: 0.05% or less, Nb: 0.05% or less, V: 0.1% or less, Mo: 1% or less, Ni: 0.5% or less, Cu: 0.5% or less, B: 0.05% or less and Ca: 0.01% or less.

## Patentansprüche

1. Kaltverformtes nahtloses Stahlrohr für eine Antriebswelle mit einer Stahlzusammensetzung umfassend, in Gew.%, C: 0, 30-0, 47 %, Si: 0, 50 % oder weniger, Mn: 0, 50-2, 00 %, P: 0, 20 % oder weniger, S: 0, 005 % oder weniger und Al: 0, 001-0, 050 %, wobei der Rest Fe und Verunreinigungen ist, **dadurch gekennzeichnet, dass** es eine Zugfestigkeit von nicht weniger als 784 MPa und nicht mehr als 950 MPa hat und die Tiefe jeder Innenseiten-Falte, die auf dessen innerer Oberfläche zurückbleibt, in einem Querschnitt, senkrecht zur Längsrichtung gesehen, nicht mehr als 0, 20 mm ist.

2. Kaltverformtes nahtloses Stahlrohr für eine Antriebswelle nach Anspruch 1, welches ferner anstelle eines Teils von Fe ein oder mehrere der folgenden umfasst: Cr: 1,5 % oder weniger, Ti: 0,05 % oder weniger, Nb: 0,05 % oder weniger, V: 0,1 % oder weniger, Mo: 1 % oder weniger, Ni : 0,5 % oder weniger, Cu: 0,5 % oder weniger, B: 0,05 % oder weniger und Ca: 0,01 % oder weniger.

**3.** Verfahren zur Herstellung eines kaltverformten nahtlosen Stahlrohrs für eine Antriebswelle, umfassend:

Durchstoßen und Walzen eines Barrens mit einer Zusammensetzung, umfassend, in Gew. %, C: 0, 30-0, 47 %, Si: 0, 50 % oder weniger, Mn: 0, 50-2, 00 %, P: 0, 020 % oder weniger, S: 0, 005 % oder weniger und Al : 0, 001-0, 050 %, wobei der Rest Fe und Verunreinigungen von dem Mannesmann-Rohrherstellungsverfahren ist; Streckwalzen und Bemessungswalzen des erhaltenen hohlen Rohres; und Kaltziehen des erhaltenen hohlen Rohres auf eine solche Weise, dass sich eine Wandstärken-Reduktionsrate am Abschnitt der minimalen Wandstärke des hohlen Rohrs auf mindestens 10 % beläuft.

**4.** Verfahren zur Herstellung eines kaltverformten nahtlosen Stahlrohrs für eine Antriebswelle nach Anspruch 3, wobei:

das Bemessungswalzen unter Verwendung einer Bemessungswalzmaschine, die mehrere mit jeweils mindestens zwei Kaliberwalzen ausgestatte Gerüste umfasst, durchgeführt wird, wobei das hohle Rohr unter Verwendung solcher Kaliberwalzen gewalzt wird, dass, wenn zwei tangentiale Phantomlinien an gegenüberliegenden Randbereichen benachbarter Kaliberwalzen in jedem Gerüst gezogen werden, der kleinste Winkel $\beta$min (Grad) unter den Winkeln $\beta$ (Grad), die jeweils durch die zwei tangentialen Linien, wie sie an allen Gerüsten vorkommen, gebildet werden, die durch die unten angegebene Formel (1) dargestellte Beziehung erfüllt, ferner gefolgt von Kaltziehen des hohlen Rohres:

$$\beta min \geq 1{,}13 \times 10 \times \ln (t/D \times 100) + 1{,}37 \times 10^2 \qquad \ldots(1)$$

wobei D: Rohr-Außendurchmesser (mm) nach Bemessungswalzen, t: Rohr-Wanddicke (mm) nach Bemessungswalzen, ln(x): natürlicher Logarithmus von x.

**5.** Verfahren zur Herstellung eines kaltverformten nahtlosen Stahlrohrs für eine Antriebswelle nach einem der Ansprüche 3 oder 4, wobei das warmgewalzte hohle Rohr einem Kaltziehvorgang und dann Spannungsarnglühen unterzogen wird.

**6.** Verfahren zur Herstellung eines kaltverformten nahtlosen Stahlrohrs für eine Antriebswelle nach einem der Ansprüche 3-5, wobei die Stahlzusammensetzung ferner anstelle eines Teils des Fe ein oder mehrere der folgenden umfasst: Cr: 1,5 % oder weniger, Ti: 0,05 % oder weniger, Nb: 0,05 % oder weniger, V: 0,1 % oder weniger, Mo: 1 % oder weniger, Ni: 0,5 % oder weniger, Cu: 0,5 % oder weniger, B: 0,05 % oder weniger und Ca: 0,01 % oder weniger.

**Revendications**

**1.** Tube d'acier sans soudure fini à froid pour un arbre d'entraînement, ayant une composition d'acier comprenant, en % en masse, C : 0,30 à 0,47 %, Si : 0,50 % ou moins, Mn : 0,50 à 2,00 %, P : 0,20 % ou moins, S : 0,005 % ou moins et Al : 0,001 à 0,050 %, le reste étant Fe et des impuretés, **caractérisé en ce qu'**il a une résistance à la traction non inférieure à 784 MPa et non supérieure à 950 MPa et la profondeur de chaque pli de surface intérieure restant sur la surface intérieure de celui-ci, lorsque vu dans une section transversale perpendiculaire à la direction longitudinale, n'est pas supérieure à 0,20 mm.

**2.** Tube d'acier sans soudure fini à froid pour un arbre d'entraînement selon la revendication 1 qui contient en outre, à la place d'une partie de Fe, un ou plusieurs éléments parmi Cr : 1,5 % ou moins, Ti : 0,05 % ou moins, Nb : 0,05 % ou moins, V : 0,1 % ou moins, Mo : 1 % ou moins, Ni : 0,5 % ou moins, Cu : 0,5 % ou moins, B : 0,05 % ou moins et Ca : 0,01 % ou moins.

**3.** Procédé de production d'un tube d'acier sans soudure fini à froid pour un arbre d'entraînement, comprenant :

le perçage et le laminage d'une billette ayant une composition comprenant, en % en masse, C : 0,30 à 0,47 %, Si : 0,50 % ou moins, Mn : 0,50 à 2,00 %, P : 0,020 % ou moins, S : 0,005 % ou moins et Al : 0,001 à 0,050 %, le reste étant Fe et des impuretés par le procédé Mannesmann de fabrication de tube ; le laminage d'allongement et le laminage de calibrage du tube creux obtenu ; et

l'étirage à froid du tube creux obtenu d'une manière telle qu'un taux de réduction d'épaisseur de paroi sur la portion d'épaisseur de paroi minimale du tube creux peut s'élever à au moins 10 %.

4. Procédé de production d'un tube d'acier sans soudure fini à froid pour un arbre d'entraînement selon la revendication 3, dans lequel :

le laminage de calibrage est réalisé en utilisant une machine à laminer et calibrer comprenant une pluralité de stations équipées chacune d'au moins deux cylindres rotatifs de laminage de calibrage dans lequel le tube creux est laminé en utilisant ces cylindres de calibrage qui, lorsque deux lignes tangentielles fictives sont dessinées sur des portions de bord opposés de cylindres de calibrage voisins dans chaque station, le plus petit angle βmin (degrés) entre les angles P (degrés) respectivement formés par les deux lignes tangentielles tel que trouvé dans toutes les stations satisfait la relation représentée par la formule (1) indiquée cidessous, en outre suivi d'un étirage à froid du tube :

$$\beta min \geq 1{,}13 \times 10 \times \ln(t/D \times 100) + 1{,}37 \times 10^2 \qquad (1)$$

où D : diamètre de tube extérieur (mm) après le laminage de calibrage, t : épaisseur de paroi de tube (mm) après laminage de calibrage, ln(x) : logarithme népérien de x.

5. Procédé de production d'un tube d'acier sans soudure fini à froid pour un arbre d'entraînement selon l'une quelconque des revendications 3 ou 4, dans lequel le tube creux laminé à chaud est soumis à un étirage à froid et ensuite à un recuit de relaxation des contraintes.

6. Procédé de production d'un tube d'acier sans soudure fini à froid pour un arbre d'entraînement selon l'une quelconque des revendications 3 à 5, dans lequel la composition d'acier contient en outre, à la place d'une partie de Fe, un ou plusieurs éléments parmi Cr : 1,5 % ou moins, Ti : 0,05 % ou moins, Nb : 0,05 % ou moins, V : 0,1 % ou moins, Mo : 1 % ou moins, Ni : 0,5 % ou moins, Cu : 0,5% ou moins, B : 0,05% ou moins et Ca : 0,01 % ou moins.

FIG. 1

FIG. 2

# FIG. 3

(a)

(b)

Inner Surface Wrinkle Depth (mm)

# FIG. 4

(a)

(b)

Inner Surface Wrinkle Depth (mm)

# FIG. 5

## FIG. 6

$$\beta\,min=11.3\times ln(t/D\times 100)+13.7$$

## FIG. 7

FIG. 8

FIG. 9

# FIG. 10

Pressure
Welding Site

Pressure
Welding Site

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005320575 A
- EP 1743950 A1
- JP 2822849 B
- WO 2005092531 A1